# FASCICULE DE BREVET EUROPEEN

(11) **EP 2 005 441 B1**
(45) Date de publication et mention de la délivrance du brevet: **23.04.2014**
(21) Numéro de dépôt: 07730961.5
(22) Date de dépôt: 13.02.2007
(51) Int. Cl.: G21C 17/108, G08C 19/28, H02K 24/00

(54) **SYSTEME D'INSTRUMENTATION INTERNE D'UN REACTEUR NUCLEAIRE A CARTE ELECTRONIQUE EVOLUEE ET PROCEDE CORRESPONDANT DE MODIFICATION D'UN SYSTEME D'INSTRUMENTATION INTERNE D'UN REACTEUR NUCLEAIRE.**
INNENINSTRUMENTIERUNGSYSTEM EINES KERNREAKTORS MIT HOCH ENTWICKELTER ELEKTRONISCHER SCHALTUNG UND ZUGEHÖRIGES VERFAHREN ZUR NACHRÜSTUNG DES INNENINSTRUMENTIERUNGSYSTEMS EINES KERNREAKTORS
INTERNAL INSTRUMENTATION SYSTEM FOR A NUCLEAR REACTOR, HAVING A VARIABLE ELECTRONIC CARD AND CORRESPONDING METHOD OF MODIFYING AN INTERNAL INSTRUMENTATION SYSTEM FOR A NUCLEAR REACTOR

(30) Priorité: 13.04.2006 FR 0603305
(43) Date de publication de la demande: 24.12.2008
(73) Titulaire: Areva NP, 92400 Courbevoie (FR)
(72) Inventeur: LECLERC, Michel, F-69400 Limas (FR)
(74) Mandataire: Domenego, Bertrand
(86) Numéro de dépôt international: PCT/FR2007/000248
(87) Numéro de publication internationale: WO 2007/118943

(56) Documents cités:
- DE-A1- 19 628 286
- FR-A1- 2 438 825
- GB-A- 2 001 222
- JP-A- 3 009 298
- JP-A- 9 033 686
- US-A- 2 808 547
- DATABASE WPI Week 200319 Derwent Publications Ltd., London, GB; AN 2003-196139 XP002403933 -& RU 2 195 029 C2 (OBNINSK ATOMIC POWER ENG INST) 20 décembre 2002 (2002-12-20)

## Description

La présente invention concerne un système d'instrumentation interne d'un réacteur nucléaire, du type comprenant au moins :
- une sonde de mesure du flux neutronique dans le coeur du réacteur nucléaire,
- un câble de déplacement de la sonde à l'intérieur du coeur,
- un dispositif rotatif d'entraînement du câble de déplacement, et
- un dispositif de détermination de la position angulaire du dispositif rotatif d'entraînement, lequel dispositif de détermination comprend un synchroémetteur comprenant lui-même un rotor solidaire en rotation du dispositif d'entraînement et un stator comportant trois bobinages.

L'invention s'applique, par exemple, aux réacteurs nucléaires refroidis par de l'eau sous pression et destinés à alimenter en électricité les réseaux électriques domestiques.

Les réacteurs nucléaires tels que les réacteurs nucléaires refroidis par de l'eau sous pression comportent un coeur constitué par des assemblages de combustible généralement de forme prismatique droite qui sont disposés de manière juxtaposée avec leurs axes longitudinaux dans la direction verticale, c'est-à-dire suivant la hauteur du coeur.

Pendant le fonctionnement du réacteur nucléaire, il est nécessaire de s'assurer en permanence que le réacteur fonctionne dans de parfaites conditions et de manière conforme aux conditions générales de sécurité fixées par des règlements et des normes.

En particulier, il est nécessaire de déterminer si la production et la répartition volumique du flux de neutrons ainsi que la répartition volumique de la puissance dégagée dans le coeur sont conformes aux conditions correspondant à un fonctionnement normal et satisfaisant du coeur.

Pour cela, on est amené à déterminer et calculer des paramètres de fonctionnement du coeur du réacteur nucléaire, tels que la répartition volumique de la puissance dans le coeur, les facteurs de forme du flux neutronique ou encore le rapport de crise d'ébullition. Ces paramètres sont déterminés en particulier à partir de mesures de flux neutroniques dans le coeur permettant de connaître la répartition du flux neutronique dans l'ensemble du coeur en trois dimensions.

Les mesures de flux neutronique dans le coeur nécessaires pour la surveillance en continu du réacteur nucléaire en fonctionnement sont généralement réalisées par des chambres disposées à l'extérieur de la cuve du réacteur et généralement désignées comme "chambres excore".

Ces chambres qui comportent plusieurs étages de mesures (par exemple six) suivant la hauteur du coeur sont généralement disposées pour effectuer les mesures dans quatre zones à la périphérie du coeur du réacteur nucléaire et situées symétriquement par rapport à deux plans de symétrie axiale du coeur faisant entre eux un angle de 90°.

Les chambres étagées des détecteurs excore permettent d'obtenir des mesures de flux à différents niveaux suivant la hauteur du coeur et dans les quatre zones réparties autour du coeur, dans la direction circonférentielle. Toutefois, ces dispositifs externes ne fournissent que des valeurs approchées du flux neutronique à l'intérieur du coeur et une représentation approximative de la répartition du flux neutronique. De ce fait, les paramètres de surveillance sont obtenus de manière peu précise et, par sécurité, on doit prévoir des marges plus grandes par rapport aux valeurs critiques de ces paramètres qu'on ne doit pas atteindre ou dépasser.

Pour obtenir une représentation plus exacte de la distribution de flux neutronique dans le coeur, on effectue, de manière complémentaire, à intervalles de temps réguliers mais relativement longs, par exemple de l'ordre d'un mois, des mesures de flux neutronique à l'intérieur du coeur, en utilisant des sondes de mesure mobiles de très petites dimensions, appelées "sondes incore", qui sont généralement constituées par des chambres à fission. Ces sondes mobiles appartiennent au système d'instrumentation interne du réacteur nucléaire, également dénommé RIC pour Reactor In Core.

Les sondes incore sont fixées chacune à l'extrémité d'un câble souple, comme par exemple un câble de la société Téléflex, assurant son déplacement à l'intérieur d'une voie de mesure du système d'instrumentation interne du réacteur nucléaire. Chacune des voies de mesure débouche, à l'une de ses extrémités, dans un local d'instrumentation situé en partie basse du bâtiment du réacteur. On assure le déplacement des sondes à fission dans les voies de mesure depuis le local d'instrumentation grâce à des unités de commande qui comprennent des dispositifs rotatifs d'entraînement des câbles, par exemple sous forme de roues dentées.

Chacune des voies de mesure comporte, à l'intérieur du coeur du réacteur nucléaire, un tube d'instrumentation d'un assemblage de combustible et un doigt de gant placé à l'intérieur du tube d'instrumentation dans lequel circule la sonde à fission. Les mesures de flux neutronique sont réalisées dans des canaux de mesure constitués par les tubes d'instrumentation de direction verticale d'un ensemble d'assemblages de combustibles répartis dans toute la section du coeur. ,

Par exemple, dans le cas d'un coeur comportant cent soixante dixsept assemblages de combustible, on utilise généralement cinquante six voies de mesure. On utilise cinquante huit voies de mesure pour un coeur de cent quatre-vingt treize assemblages de combustible, quarante huit ou cinquante voies de mesure pour un coeur de cent cinquante sept assemblages de combustible et soixante voies de mesure pour un coeur de deux cent cinq assemblages de combustible.

Les mesures de flux neutronique sont réalisées pendant le déplacement à faible vitesse des sondes incore mobiles suivant toute la hauteur du coeur. On peut ainsi réaliser de nombreux points de mesure du flux neutronique suivant la hauteur du coeur, avec un espacement faible. On peut réaliser par exemple des mesures en six cents points répartis suivant la hauteur de chacun des canaux de mesure. D'autre part, compte tenu de la répartition des assemblages de combustible instrumentés dans le coeur et des symétries du coeur, on obtient une image suffisamment représentative du flux neutronique, sous la forme d'une carte de flux. La détermination précise de la carte du flux n'est réalisée que périodiquement en utilisant les sondes mobiles, dans le cas des procédés d'exploitation connus.

Afin d'obtenir une carte de flux correcte, il est nécessaire de connaître les positions exactes des sondes dans le coeur du réacteur nucléaire lors de l'acquisition des mesures de flux.

Pour cela, dans les systèmes d'instrumentation interne du type précité, on utilise un dispositif de détermination de la position angulaire de la roue d'entraînement du câble de déplacement de la sonde dont on cherche à connaître la position. Le dispositif de détermination de la position angulaire comprend un synchroémetteur qui est disposé dans le local d'instrumentation, lui-même disposé dans le bâtiment du réacteur nucléaire, et un synchrorécepteur éloigné du bâtiment du réacteur et généralement disposé dans ou à proximité de la salle de commande du réacteur nucléaire.

Le synchroémetteur comprend un rotor muni d'un bobinage placé sous une tension alternative de modulation, par exemple de 220 V et à une fréquence de 50 Hz. Ce rotor est solidaire en rotation de la roue d'entraînement. Le synchroémetteur comprend également un stator pourvu de trois bobinages placés à 120° l'un de l'autre. Le champ magnétique résultant de la rotation du rotor engendre des tensions aux bornes des bobinages du stator dont les amplitudes dépendent de la position angulaire du rotor et donc de la roue d'entraînement.

Le synchrorécepteur a une structure analogue et fonctionne suivant un principe inverse. Les trois bobinages de son stator sont alimentés par les tensions provenant des bornes des bobinages du stator du synchroémetteur et créent un champ magnétique dont l'orientation reproduit la position angulaire du rotor du synchroémetteur. Le rotor du synchrorécepteur s'aligne alors sur ce champ magnétique et a une position angulaire qui dépend donc de la position de la roue d'entraînement et donc de la sonde correspondante de mesure de flux neutronique.

Le dispositif de détermination de la position angulaire de la roue comprend également un codeur ou deux codeurs absolus couplés au rotor du synchrorécepteur et qui fournit des signaux à un automate correspondant de l'armoire de contrôle et de commande du système d'instrumentation interne. Cet automate exploite ces signaux afin de déterminer les positions exactes des sondes. Les positions ainsi déterminées ainsi que les mesures effectuées par les sondes sont transmises par l'automate à un calculateur de tranche qui établit la carte de flux.

Les synchrorécepteurs et les codeurs absolus correspondant à chacune des sondes mobiles de détection du flux neutronique sont disposés dans des tiroirs prévus en partie haute de l'armoire de contrôle et de commande du système d'instrumentation interne du réacteur.

Les dispositifs de détermination de la position angulaire des roues d'entraînements, qui utilisent chacun deux synchromachines couplées l'une à l'autre, permettent d'éloigner les codeurs absolus des unités de commande de la salle d'instrumentation située à proximité de la cuve du réacteur, unités qui sont soumises à des rayonnements ionisants néfastes aux codeurs absolus qui sont des dispositifs optoélectroniques.

De tels dispositifs de détermination de la position angulaire des roues d'entraînement s'avèrent donc satisfaisants mais leur maintenance est complexe.

FR 2 438 825 décrit un système de mesure de paramètres imposés via une pluralité de détecteurs positionnés de façon mobile à l'intérieur d'un environnement surveillé.

DE 196 28 286 décrit un détecteur de position angulaire comportant un stator à quatre bobines. Les courants induits dans les bobines de station sont traités et numérisés pour déterminer la position angulaire du rotor.

Un but de l'invention est donc de résoudre ce problème en fournissant un système d'instrumentation interne du type précité qui soit de maintenance plus aisée.

A cette fin, l'invention a pour objet un système d'instrumentation interne du type précité, caractérisé en ce que le dispositif de détermination de la position angulaire comprend un ensemble électronique de numérisation d'au moins deux des tensions aux bornes des bobinages du stator du synchroé metteur et de traitement numérique de ces tensions numérisées pour produire au moins un signal de sortie représentatif de la position angulaire du dispositif rotatif d'entraînement.

Selon des modes particuliers de réalisation, le système peut comprendre une ou plusieurs des caractéristiques suivantes, prise(s) isolément ou selon toutes les combinaisons techniquement possibles :
- le système comprend une armoire de contrôle et de commande, laquelle armoire est destinée à être disposée hors du bâtiment du réacteur nucléaire et contient l'ensemble électronique ;
- l'ensemble électronique comprend :
   - un module de détermination des tensions aux bornes des bobinages du stator du synchroémetteur,
   - éventuellement un module d'adaptation des tensions déterminées,
   - un module de numérisation d'au moins deux tensions des tensions déterminées et éventuellement adaptées, et
   - un module de traitement numérique des tensions numérisées ;
      - l'ensemble électronique comprend un module de production de signaux de sortie de type codeur incrémental ;
      - le dispositif de détermination de la position angulaire est apte à déterminer la position de la sonde par traitement numérique des tensions numérisées, et l'ensemble électronique comprend un module de production de signaux de sortie de type codeur absolu ;
      - l'ensemble électronique est un ensemble de numérisation de seulement deux tensions des tensions déterminées et éventuellement adaptées ;
      - l'ensemble électronique comprend un module de détection d'une baisse de tension adapte à déclencher la sauvegarde de la position déterminée ;
      - l'ensemble électronique comprend un module de calage de la position déterminée, lequel module est destiné à être raccordé à un micro rupteur dont l'état est modifié par passage de la sonde à une position déterminée ; et
      - l'ensemble électronique comprend un générateur d'alimentation d'un bobinage du rotor du synchroémetteur en tension de modulation.

L'invention a également pour objet un procédé de modification d'un système d'instrumentation interne d'un réacteur nucléaire, le système d'instrumentation interne comprenant au moins :
- une sonde de mesure du flux neutronique dans le coeur du réacteur nucléaire,
- un câble de déplacement de la sonde à l'intérieur du coeur,
- un dispositif rotatif d'entraînement du câble de déplacement, et
- un dispositif de détermination de la position angulaire du dispositif rotatif d'entraînement, lequel dispositif comprend un synchroémetteur, un synchrorécepteur et au moins un codeur de position, le synchroémetteur comprenant lui-même un rotor solidaire en rotation du dispositif rotatif d'entraînement et un stator comportant trois bobinages, le synchrorécepteur comprenant lui-même un rotor solidaire en rotation du codeur de position et un stator comportant trois bobinages raccordés aux bobinages du stator du synchroémetteur,
   caractérisé en ce que le procédé comprend une étape de remplacement du synchrorécepteur et du codeur de position par un ensemble électronique de numérisation d'au moins deux des tensions aux bornes des bobinages du stator du synchroémetteur et de traitement numérique de ces tensions numérisées pour produire au moins un signal de sortie représentatif de la position angulaire du dispositif rotatif d'entraînement.

L'invention sera mieux perçue à la lecture de la description qui va suivre, donnée uniquement à titre d'exemple, et faite en se référant aux dessins annexés, sur lesquels :
- la figure 1 est une vue schématique en perspective d'un système d'instrumentation interne d'un réacteur nucléaire à eau sous pression selon l'invention ;
- la figure 2 est un schéma illustrant une carte électronique du système de la figure 1 ; et
- les figures 3 et 4 sont des vues analogues à la figure 2, illustrant d'autres modes de réalisation de l'invention.

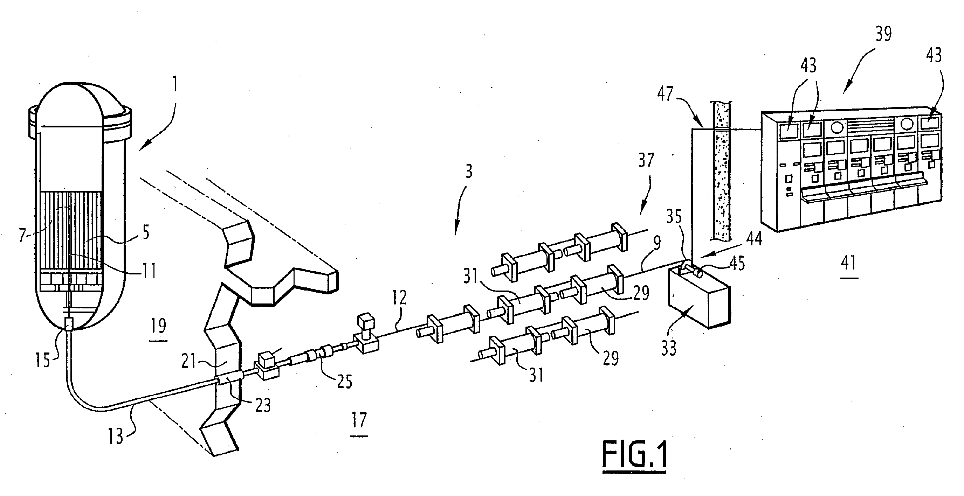

Sur la figure 1 on a représenté la cuve 1 d'un réacteur nucléaire à eau sous pression et une partie du système 3 d'instrumentation interne du réacteur nucléaire. A l'intérieur de la cuve 1 est disposé le coeur 5 du réacteur constitué par des assemblages de combustible de forme prismatique juxtaposés et placés verticalement. Chacun des assemblages de combustible du coeur 5 du réacteur comporte un tube-guide d'instrumentation, dans une disposition verticale à l'intérieur du coeur 5. On réalise des mesures de flux neutronique par déplacement, dans la direction verticale, à l'intérieur des tubes-guides d'instrumentation de certains des assemblages du coeur, de sondes 7 de mesure de flux fixées à l'extrémité de câbles 9 par l'intermédiaire desquels on réalise le déplacement des sondes 7, par poussée ou traction sur les câbles 9 et le recueil des signaux des sondes 7. Sur la figure 1, une sonde 7 en position intermédiaire dans le coeur 5 a été repérée.

Sur la figure 1, on a représenté, à titre d'exemple, un tube de guidage d'instrumentation 11 d'une voie de mesure du système d'instrumentation interne 3. Le système d'instrumentation interne 3 peut comporter, par exemple, trente-huit à soixante voies de mesure. La partie terminale à l'intérieur du coeur 5 de chacune des voies est constituée par un tube de guidage d'un assemblage de combustible analogue au tube 11.

Les tubes de guidage 11 des voies de mesure de flux neutronique sont réparties dans toute la section du coeur 5 et les mesures de flux sont réalisées sur toute la hauteur du coeur par déplacement de la sonde de mesure 7.

Chacune des voies de mesure comporte une un doigt de gant 12, c'est-à-dire un tube fermé à l'une de ses extrémités, dans lequel on peut déplacer une sonde 7 de mesure de flux par l'intermédiaire de son câble de liaison et de déplacement 9. Le doigt de gant 12 est introduit à l'intérieur du coeur 5 du réacteur dans un tube de guidage 11 d'un assemblage de combustible.

Le doigt de gant 12 est amené vers ce tube de guidage 11 à l'intérieur d'un conduit de guidage d'instrumentation 13 joignant une manchette 15 de traversée du fond de la cuve 1 du réacteur à un local d'instrumentation 17. Ce local 17 est disposé de manière adjacente par rapport à la partie 19 du bâtiment du réacteur ou puits de cuve dans laquelle est disposée la cuve 1 du réacteur. Le local d'instrumentation 17 et le puits de cuve 19 appartiennent au bâtiment du réacteur.

Le conduit de guidage d'instrumentation 13 traverse la paroi 21 en béton séparant le local d'instrumentation 17 du puits de cuve 19, à l'intérieur d'un dispositif de pénétration étanche 23. L'extrémité du conduit de guidage d'instrumentation 13 pénétrant dans le local d'instrumentation 17 est reliée à une buselure d'étanchéité 25 par l'intermédiaire de laquelle on réalise l'introduction étanche, à l'intérieur du conduit de guidage d'instrumentation 13, du doigt de gant 12 dont une extrémité est accessible à l'intérieur du local d'instrumentation 17.

Le doigt de gant 12 peut être déplacé à l'intérieur du conduit de guidage d'instrumentation 13 et à l'intérieur de la cuve 1 du réacteur nucléaire, suivant toute la hauteur du coeur 5, à l'intérieur d'un tube de guidage d'instrumentation 11 d'un assemblage de combustible entre une position d'insertion et une position extraite du coeur 5 du réacteur nucléaire.

Les doigts de gant 12 de toutes les voies de mesure du système d'instrumentation interne du réacteur nucléaire sont placés dans leur position extraite du coeur, avant une opération de rechargement du coeur.

En revanche, pendant le fonctionnement du réacteur nucléaire, les doigts de gant 12 des différentes voies de mesure du système d'instrumentation interne 3 dans chacun desquels on déplace une sonde de mesure de flux 7, sont dans leur position d'insertion maximale à l'intérieur du coeur 5 du réacteur.

Les différentes voies de mesure du système d'instrumentation interne constituent plusieurs et généralement quatre à six groupes de voies comportant chacun une dizaine de voies de mesure.

On réalise des mesures de flux, dans chacune des voies d'un groupe de voies de mesure, en utilisant une sonde de flux neutronique 7 fixée à l'extrémité d'un câble de liaison et de déplacement 9 qui est amenée à traverser successivement un sélecteur de groupes 29 et un sélecteur de voies 31 pour être introduit dans le doigt de gant 12 d'une voie de mesure définie par commande des sélecteurs 29 et 31.

Chacun des câbles de liaison et d'entraînement 9 d'une sonde de mesure 7 est entraîné par une unité de commande 33 comportant un motoréducteur (non représenté) entraînant une roue dentée 35 avec laquelle engrène le câble 9 d'entraînement de la sonde 7. En variante, la roue 35 n'est pas nécessairement dentée et elle peut également être remplacée par d'autres dispositifs rotatifs d'entraînement. La sonde 7, le câble de liaison et d'entraînement 9 de la sonde 7 et l'unité de commande 33 constituent une chaîne de mesure 37. Typiquement, le système d'instrumentation interne 3 comporte quatre à six chaînes de mesure.

Chaque unité de commande 33 comporte également un enrouleur (non représenté) assurant le stockage du câble 9 d'entraînement de la sonde et exerçant une force de rappel constante sur le câble 9, aussi bien lorsque le câble 9 est déplacé dans le sens de l'insertion que lorsqu'il est déplacé dans le sens de l'extraction d'une voie de mesure.

La commande du système d'instrumentation interne 3 est assurée par une armoire de répartition (non-représentée) disposée dans le local d'instrumentation 17, elle-même reliée à une armoire de contrôle et de commande 39 disposée dans la salle de commande 41 du réacteur ou à proximité de cette dernière. L'armoire de répartition comporte quatre à six sous-ensembles identiques destinés à assurer la commande des quatre à six sondes de mesure 7 reliées chacune à un câble de liaison et de déplacement 9, chacun des sous-ensembles de l'armoire de répartition étant relié à un automate respectif de chaîne de l'armoire de contrôle et de commande 39.

On réalise ainsi la commande des déplacements des sondes 7 et la commande des sélecteurs 29 et 31 pour réaliser successivement des mesures de flux dans chacune des voies de mesure du système d'instrumentation interne 3.

L'automate associé à chaque chaîne de mesure 37 assure principalement les fonctions suivantes :
- pilotage des électromécanismes du local d'instrumentation 17, et notamment des sélecteurs de groupes 29, des sélecteurs de voies 31 et des unités de commande 33 afin d'assurer, de manière automatique et/ou manuelle, le déplacement des sondes 7 et les mesures requises,
- transmission au calculateur de tranche, disposé dans la salle de commande 41 du réacteur nucléaire ou à proximité, des mesures effectuées par les sondes 7 afin que ce calculateur assure la cartographie des flux neutroniques.

Pour assurer cette dernière fonction, les automates associés aux chaînes de mesure 37 reçoivent les mesures acquises par les sondes 7 via des tiroirs disposés dans les baies supérieures 43 de l'armoire de contrôle et de commande 39.

Chacun des tiroirs associés à une chaîne 37 transmet également des informations fournies par un dispositif 44 de détermination de la position angulaire de la roue d'entraînement 35 correspondante.

Ce dispositif de détermination 44 comprend un synchroémetteur 45 classique dont le rotor est solidaire en rotation de la roue 35. Ce synchroémetteur 45 est donc disposé dans le local d'instrumentation 17 et il est raccordé au tiroir électrique correspondant de l'armoire de contrôle et de commande 39 par une ligne 47.

Selon l'invention, le dispositif 44 de détermination de la position angulaire comprend également, dans le tiroir associé de l'armoire de contrôle et de commande 39, un ensemble électronique 49 de numérisation des tensions issues du synchroémetteur 45.

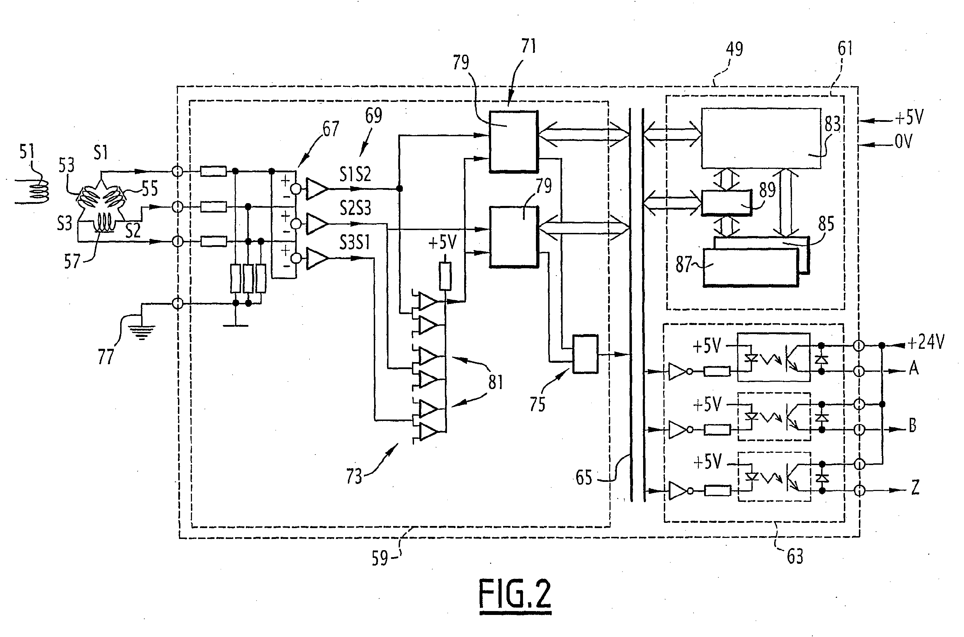

Cet ensemble électronique 49, qui est par exemple réalisé sous forme d'une carte, est illustré par la figure 2. On notera que sur la partie gauche de cette figure 2, on a représenté schématiquement le bobinage 51 du rotor du synchroémetteur 45 et les trois bobinages 53, 55 et 57 du stator du synchroémetteur 45. Dans l'exemple représenté, les bobinages 53, 55 et 57 sont disposés en triangle, mais ils peuvent, en variante, être disposés en étoile.

L'ensemble électronique 49 comprend une unité 59 de traitement préalable des signaux issus du synchroémetteur 45, une unité 61 de traitement numérique et une unité 63 de production de signaux représentatifs de la position de la roue 35, ces unités communiquant par l'intermédiaire d'un bus 65.

L'unité de traitement préalable 59 comprend :
- un module 67 de détermination des tensions aux bornes des bobinages 53, 55 et 57, c'est-à-dire entre leurs bornes S1, S2 et S3, ces tensions étant notées respectivement S1S2, S2S3 et S3S1 ;
- un module 69 d'adaptation de ces tensions S1S2, S2S3 et S3S1 ;
- un module 71 de conversion numérique des tensions S1S2 et S2S3 adaptées ;
- un module 73 de déclenchement de la conversion numérique ; et
- un module 75 de détection de la fin des conversions numériques.

Dans l'exemple décrit, le bobinage 51 du rotor du synchroémetteur 45 peut être alimenté en une tension de modulation de 220 V à une fréquence de 50 Hz. Les tensions entre les bornes S1, S2 et S3 des bobinages 53, 55 et 57 sont donc modulées à 50 Hz et leurs amplitudes dépendent de la position angulaire du rotor du synchroémetteur 45 et donc de la roue 35. Le module 67 est raccordé aux bornes S1, S2 et S3 et détermine les tensions S1S2, S2S3 et S3S1 par soustraction des signaux fournis par les bornes S1, S2 et S3 pour pallier l'absence de tension neutre. Une tension intermédiaire est néanmoins reconstituée et, pour des raisons de sécurité, est raccordée à la terre en 77.

Les tensions S1S2, S2S3 et S3S1 en sortie du module 67 peuvent avoir des amplitudes de crête de 80 V. Le module d'adaptation 69 comprend des amplificateurs permettant de diminuer leurs amplitudes, par exemple pour atteindre des amplitudes de crête maximales d'environ 10 V.

Le module de numérisation 71 comprend par exemple deux convertisseurs 79, qui sont, encore à titre d'exemple, des convertisseurs à onze bits plus un bit de signe. Ces deux convertisseurs 79 sont déclenchés en synchronisme avec la modulation des signaux issus des bornes S1, S2 et S3 du stator du synchroémetteur 45 et donc avec la tension alimentant le bobinage 51 du rotor du synchroémetteur 45.

Cette synchronisation est réalisée grâce à une série de comparateurs à fenêtres 81 qui déclenchent les conversions des tensions S1S2 et S2S3 par les convertisseurs 79 lorsqu'au moins un des signaux S1S2, S2S3 ou S3S1 atteint une amplitude prédéterminée. La fin des conversions numériques est signalée par le module 75 à l'unité de traitement numérique 61 par l'intermédiaire du bus 65 qui communique également avec les sorties des convertisseurs 79.

L'unité de traitement numérique 61 comprend un micro-contrôleur 83, des mémoires, dont par exemple une mémoire vive 85 et une mémoire morte 87 et des moyens 89 d'aiguillage des données entre le micro-contrôleur 83, les mémoires 85 et 87 et le bus 65.

L'unité de traitement numérique 61, et notamment le micro-contrôleur 83, assure le traitement numérique des tensions S1S2 et S2S3 préalablement adaptées et numérisées par l'unité 59 pour déterminer la position angulaire du rotor du synchroémetteur 45.

Les paramètres pris en compte pour le traitement numérique sont les suivants :
- l'unité de codage, ou pas codeur, est telle qu'un tour du rotor du synchroémetteur 45 correspond à 1024 pas,
- la position angulaire P du rotor du synchroémetteur 45 est exprimée en pas, sous forme d'un nombre entier signé, et
- un pas correspond approximativement à un déplacement de la sonde 7 correspondante de 1 mm, la vitesse de déplacement pouvant atteindre 300 mm par seconde.

Les équations mathématiques sont les suivantes :
- pour une position angulaire P exprimée en pas, les tensions reçues valent, à chaque instant t exprimées en secondes :
   - S1S2(P,t) = 84*sin(P*π/512) * sin (100*π*t)
   - S2S3(P,t) = 84*sin(P*π/512+(2*π/3)) * sin (100*π*t)
   - S3S1(P,t) = 84*sin(P*π/512-(2*π/3)) * sin (100*π*t) ;
- à tout instant, S1S2(P,t) + S2S3(P,t) + S3S1(P,t) = O, ce qui explique pourquoi seules les numérisations de deux tensions, ici S1S2 et S2S3 ont été effectuées.

L'unité 61 détermine sur ces bases la position angulaire P puis la position angulaire P est ensuite traitée pour qu'elle soit comprise dans une plage comprise entre - 512 et + 511 pas.

La position angulaire P déterminée et traitée par l'unité de traitement numérique 61 est ensuite convertie en signaux de sortie de type codeur incrémental A, B et Z par l'unité 63. Ces signaux A, B et Z vont être traités par l'automate de l'armoire 39 associé à la chaîne de mesure 37 considérée afin de déterminer la position absolue de la sonde 7. Ce traitement prendra également en compte l'état des électromécanismes du système d'instrumentation 3 et notamment de mini rupteurs.

On observera que l'initialisation de la position angulaire est réalisée par une séquence préalable de prise d'origine. Ainsi, le premier mouvement après mise sous tension d'une sonde 7 doit être son retour à une position d'origine. L'unité 61 détermine ensuite la position angulaire P par rapport à la position d'origine.

Le système d'instrumentation interne 3 décrit ci-dessus comporte donc des cartes électroniques 49 à la place des synchrorécepteurs et des codeurs absolus généralement prévus dans les baies supérieures 43 de l'armoire de contrôle et de commande 39.

La maintenance du système d'instrumentation 3 est donc simplifiée puisqu'il suffit de retirer les tiroirs correspondants et de remplacer les cartes électroniques 49 en cas de besoin plutôt que de réparer ou de changer des composants des synchrorécepteurs ou des codeurs absolus.

En outre, l'armoire 39 présente une masse réduite dans les baies 43, ce qui s'avère avantageux pour satisfaire aux contraintes découlant de la prise en compte des risques de séisme.

De plus, on notera que les systèmes d'instrumentation interne 3 classiques peuvent être aisément adaptés pour comprendre un dispositif 44 évolué comme celui décrit précédemment. Il suffit pour cela de remplacer les synchros récepteurs et les codeurs absolus utilisés jusqu'à présent par des cartes électroniques 49 telles que décrite ci-dessus.

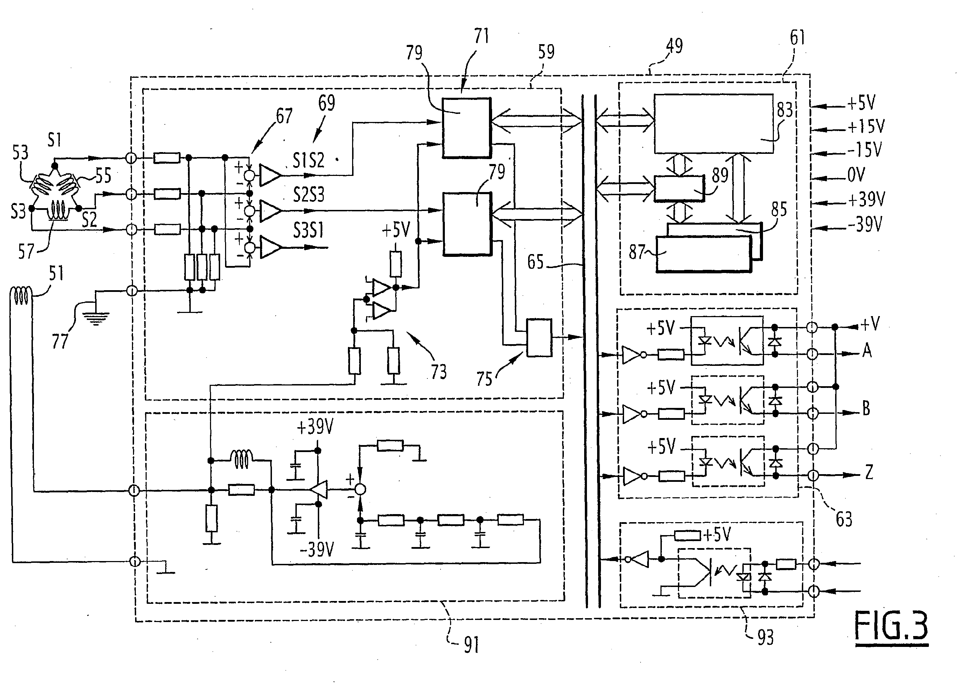

La figure 3 illustre un deuxième mode de réalisation de la carte électronique 49 qui comprend un générateur 91 d'alimentation du bobinage 51 du rotor du synchroémetteur 45.

Dans ce mode de réalisation, la tension d'alimentation produite peut être une tension de 26 V sous 400 Hz. Une telle fréquence, plus élevée que celle de 50 Hz, permet d'obtenir une meilleure précision puisque les interpolations deviennent inutiles. On notera également que la structure du module 73 de déclenchement de la conversion numérique a pu être simplifiée car la tension de modulation est directement disponible via le générateur 91 dans la carte 49.

En outre, la carte 49 comprend un module 93 de calage de la position angulaire déterminée qui est raccordé à un mini rupteur disposé à une côte prédéfinie sur le trajet de la sonde 7. Ainsi, lorsque la sonde 7 passe à cette côte prédéfinie, le mini rupteur change d'état et un signal est transmis par le module 93 à l'unité de traitement numérique 61 qui compare la position angulaire P déterminée et la position angulaire Pe effective correspondant à la position du mini rupteur et corrige éventuellement la valeur P pour qu'elle vaille Pe.

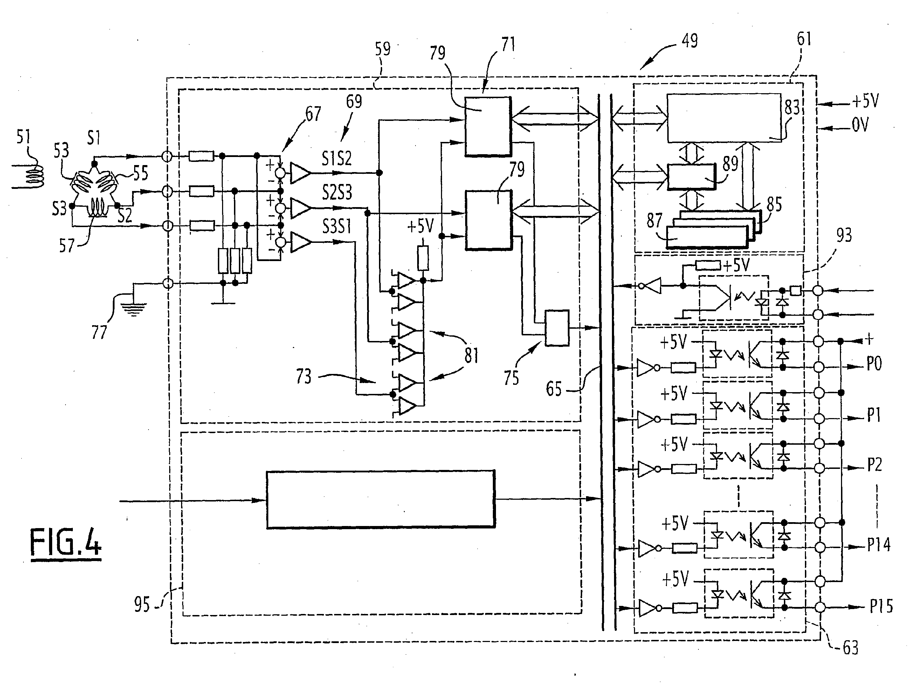

La figure 4 illustre un troisième mode de réalisation qui se distingue du premier par le fait que l'unité 61 détermine directement la position absolue de la sonde 7, par le fait que la carte 49 comprend également un module 93 de calage de la position absolue déterminée et par le fait que l'unité 63 de production des signaux représentatifs de la position est une unité de production de signaux de la position absolue, codée dans l'exemple sous 16 bits. Les signaux produits, représentatifs de la position angulaire de la roue 35, sont donc des signaux traduisant la position absolue de la sonde 7.

La carte 49 comporte en outre un module 95 de détection d'une baisse de tension qui va déclencher la sauvegarde de la position absolue déterminée par l'unité 61 de traitement numérique. Ici encore, comme dans le deuxième mode de réalisation, un recalage éventuel de la position absolue déterminée est assuré automatiquement par modification de l'état d'un micro rupteur raccordé au module 93.

Les principes décrits ci-dessus peuvent s'appliquer à des réacteurs nucléaires de tailles variées.

En outre, le nombre de chaînes de mesure peut être varié et on peut par exemple utiliser une même carte électronique pour plusieurs chaînes de mesure.

## Revendications

1. Système (3) d'instrumentation interne d'un réacteur nucléaire, du type comprenant au moins :
- une sonde (7) de mesure du flux neutronique dans le coeur (5) du réacteur nucléaire, et
- un câble (9) de déplacement de la sonde à l'intérieur du coeur (5), et
- un dispositif rotatif (35) d'entraînement du câble de déplacement (9), **caractérisé en ce que** le système (3) comprend en outre :
- un dispositif (44) de détermination de la position angulaire du dispositif rotatif d'entraînement (35), lequel dispositif de détermination comprend un synchroémetteur (45) comprenant lui-même un rotor solidaire en rotation du dispositif d'entraînement (35) et un stator comportant trois bobinages (53, 55, 57),
et **en ce que** le dispositif de détermination de la position angulaire (44) comprend un ensemble électronique (49) de numérisation d'au moins deux des tensions (S1S2, S2S3, S3S1) aux bornes des bobinages du stator du synchroémetteur et de traitement numérique de ces tensions numérisées pour produire au moins un signal de sortie (A, B, Z ; P0 - P15) représentatif de la position angulaire du dispositif rotatif d'entraînement (35).

2. Système selon la revendication 1, **caractérisé en ce qu'**il comprend une armoire de contrôle et de commande (39), laquelle armoire est destinée à être disposée hors du bâtiment du réacteur nucléaire et contient l'ensemble électronique (49).

3. Système selon la revendication 1 ou 2, **caractérisé en ce que** l'ensemble électronique (49) comprend :
- un module (67) de détermination des tensions (S1S2, S2S3, S3S1) aux bornes des bobinages (53, 55, 57) du stator du synchroémetteur,
- éventuellement un module (69) d'adaptation des tensions déterminées,
- un module (71) de numérisation d'au moins deux tensions (S1S2, S2S3) des tensions déterminées et éventuellement adaptées, et
- un module (61) de traitement numérique des tensions numérisées.

4. Système selon l'une des revendications précédentes, **caractérisé en ce que** l'ensemble électronique (49) comprend un module (63) de production de signaux de sortie de type codeur incrémental (A, B, Z).

5. Système selon l'une des revendications 1 à 4, **caractérisé en ce que** le dispositif de détermination de la position angulaire (44) est apte à déterminer la position de la sonde (7) par traitement numérique des tensions numérisées, et **en ce que** l'ensemble électronique (49) comprend un module (63) de production de signaux de sortie de type codeur absolu (P0 - P15).

6. Système selon l'une des revendications précédentes, **caractérisé en ce que** l'ensemble électronique (49) est un ensemble de numérisation de seulement deux tensions (S1S2, S2S3) des tensions déterminées et éventuellement adaptées.

7. Système selon l'une des revendications précédentes, **caractérisé en ce que** l'ensemble électronique (49) comprend un module (95) de détection d'une baisse de tension adapte à déclencher la sauvegarde de la position déterminée.

8. Système selon l'une des revendications précédentes, **caractérisé en ce que** l'ensemble électronique (49) comprend un module (93) de calage de la position déterminée, lequel module (93) est destiné à être raccordé à un micro rupteur dont l'état est modifié par passage de la sonde (7) à une position déterminée.

9. Système selon l'une des revendications précédentes, **caractérisé en ce que** l'ensemble électronique (49) comprend un générateur (91) d'alimentation d'un bobinage (51) du rotor du synchroémetteur (45) en tension de modulation.

10. Procédé de modification d'un système d'instrumentation interne (3) d'un réacteur nucléaire, le système d'instrumentation interne (3) comprenant au moins :
- une sonde (7) de mesure du flux neutronique dans le coeur (5) du réacteur nucléaire,
- un câble (9) de déplacement de la sonde à l'intérieur du coeur (5),
- un dispositif rotatif (35) d'entraînement du câble de déplacement (9), et
- un dispositif (44) de détermination de la position angulaire du dispositif rotatif d'entraînement (35), lequel dispositif de détermination comprend un synchroémetteur (45), un synchrorécepteur et au moins un codeur de position, le synchroémetteur comprenant lui-même un rotor solidaire en rotation du dispositif rotatif d'entraînement (35) et un stator comportant trois bobinages (53, 55, 57), le synchrorécepteur comprenant lui-même un rotor solidaire en rotation du codeur de position et un stator comportant trois bobinages raccordés aux bobinages du stator du synchroémetteur,
**caractérisé en ce que** le procédé comprend une étape de remplacement du synchrorécepteur et du codeur de position par un ensemble électronique (49) de numérisation d'au moins deux des tensions (S1S2, S2S3, S3S1) aux bornes des bobinages du stator du synchroémetteur et de traitement numérique de ces tensions numérisées pour produire au moins un signal de sortie (A, B, Z ; P0 - P15) représentatif de la position angulaire du dispositif rotatif d'entraînement.

## Patentansprüche

1. System (3) zur Inneninstrumentierung eines Kernreaktors des Typs, der mindestens umfasst:
- eine Sonde (7) zum Messen des Neutronenstrom in dem Kern (5) des Kernreaktors, und
- ein Kabel (9) zur Verschiebung der Sonde im Inneren des Kerns (5) und
- eine Drehvorrichtung (35) für den Antrieb des Verschiebungskabels (9),
**dadurch gekennzeichnet, dass** das System (3) außerdem umfasst:
- eine Vorrichtung (44) zur Bestimmung der Winkelposition der Antriebsdrehvorrichtung (35), wobei die Bestimmungsvorrichtung einen Drehmeldegeber (45) umfasst, der selbst einen Rotor, der hinsichtlich der Drehung mit der Antriebsvorrichtung (35) verbunden ist, und einen drei Wicklungen (53, 55, 57) aufweisenden Stator umfasst,
und dass die Vorrichtung zur Bestimmung der Winkelposition (44) eine elektronische Anordnung (49) zur Digitalisierung von mindestens zwei der Spannungen (S1S2, S2S3, S3S1) an den Anschlüssen der Wicklungen des Stators des Drehmeldegebers und zur rechnerischen Behandlung dieser digitalisierten Spannungen umfasst, um mindestens ein Ausgangssignal (A, B, Z; P0 - P15) zu erzeugen, das für die Winkelposition der Antriebsdrehvorrichtung (35) repräsentativ ist.

2. System nach Anspruch 1, **dadurch gekennzeichnet, dass** es einen Überwachungs- und Steuerschrank (39) umfasst, wobei der Schrank bestimmt ist, außerhalb des Gebäudes des Kernreaktors angeordnet zu werden, und die elektronische Anordnung (49) enthält.

3. System nach Anspruch 1 oder 2, **dadurch gekennzeichnet, dass** die elektronische Anordnung (49) umfasst:
- ein Modul (67) zum Ermitteln der Spannungen (S1S2, S2S3, S3S1) an den Anschlüssen der Wicklungen (53, 55, 57) des Stators des Drehmeldegebers,
- gegebenenfalls ein Modul (69) zur Anpassung der ermittelten Spannungen,
- ein Modul (71) zur Digitalisierung von mindestens zwei Spannungen (S1S2, S2S3) der ermittelten und gegebenenfalls angepassten Spannungen, und
- ein Modul (61) zur rechnerischen Behandlung der digitalisierten Spannungen.

4. System nach einem der vorhergehenden Ansprüche, **dadurch gekennzeichnet, dass** die elektronische Anordnung (49) ein Modul (63) zur Erzeugung von Ausgangssignalen vom Typ Inkrementalgeber (A, B, Z) umfasst.

5. System nach einem der Ansprüche 1 bis 4, **dadurch gekennzeichnet, dass** die Vorrichtung (44) zur Bestimmung der Winkelposition geeignet ist, die Position der Sonde (7) durch rechnerische Behandlung der digitalisierten Spannungen zu bestimmen, und dass die elektronische Anordnung (49) ein Modul (63) zur Erzeugung von Ausgangssignalen vom Typ Absolutwertgeber (P0 - P15) umfasst.

6. System nach einem der vorhergehenden Ansprüche, **dadurch gekennzeichnet, dass** die elektronische Anordnung (49) eine Anordnung zum Digitalisieren von nur zwei Spannungen (S1S2, S2S3) der ermittelten und gegebenenfalls angepassten Spannungen ist.

7. System nach einem der vorhergehenden Ansprüche, **dadurch gekennzeichnet, dass** die elektronische Anordnung (49) ein Modul (95) zum Detektieren eines Abfalls der Spannung umfasst, das geeignet ist, die Sicherung der bestimmten Position auszulösen.

8. System nach einem der vorhergehenden Ansprüche, **dadurch gekennzeichnet, dass** die elektronische Anordnung (49) ein Modul (93) zur Einstellung der bestimmten Position umfasst, wobei das Modul (93) bestimmt ist, an einen Mikroschalter angeschlossen zu werden, dessen Zustand von dem Durchgang der Sonde (7) bei einer bestimmten Position verändert wird.

9. System nach einem der vorhergehenden Ansprüche, **dadurch gekennzeichnet, dass** die elektronische Anordnung (49) einen Generator (91) zur Versorgung einer Spule (51) des Rotors des Drehmeldegebers (45) mit Modulationsspannung umfasst.

10. Verfahren zur Modifikation eines Systems (3) zur Inneninstrumentierung eines Kernreaktors, wobei das System (3) zur Inneninstrumentierung mindestens umfasst:
- eine Sonde (7) zur Messung des Neutronenstroms in dem Kern (5) des Kernreaktors,
- ein Kabel (9) zur Verschiebung der Sonde im Inneren des Kerns (5),
- eine Drehvorrichtung (35) für den Antrieb des Verschiebungskabels (9),
- eine Vorrichtung (44) zur Bestimmung der Winkelposition der Antriebsdrehvorrichtung (35), wobei die Vorrichtung zur Bestimmung einen Drehmeldegeber (45), einen Drehmeldeempfänger und mindestens einen Positionscodierer umfasst, wobei der Drehmeldegeber selbst einen Rotor, der bezüglich der Drehung mit der Antriebsdrehvorrichtung (35) verbunden ist, und einen Stator umfasst, der drei Wicklungen (53, 55, 57) aufweist, wobei der Drehmeldeempfänger selbst einen Rotor, der hinsichtlich der Drehung mit dem Positionscodierer verbunden ist und einen Stator umfasst, der drei Wicklungen aufweist, die mit den Wicklungen des Stators des Drehmeldegebers verbunden sind,
**dadurch gekennzeichnet, dass** das Verfahren einen Schritt des Ersetzens des Drehmeldeempfängers und des Positionscodierers durch eine elektronische Anordnung (49) der Digitalisierung von mindestens zwei der Spannungen (S1S2, S2S3, S3S1) an den Anschlüssen der Wicklungen des Stators des Drehmeldegebers und der rechnerischen Behandlung dieser digitalisierten Spannungen umfasst, um mindestens ein Ausgangssignal (A, B, Z; P0 - P15) zu erzeugen, das für die Winkelposition der Antriebsdrehvorrichtung repräsentativ ist.

## Claims

1. An internal instrumentation system (3) for a nuclear reactor, the system being of the type comprising at least:
· a measurement probe (7) for measuring neutron flux in the core (5) of the nuclear reactor;
· a movement cable (9) for moving the probe inside the core (5); and
a rotary device (35) for driving the movement cable (9); **characterized in that**
- the system further comprises an angle-determining device (44) for determining the angular position of the rotary drive device (35), which angle-determining device comprises a transmitter synchro (45) itself comprising a rotor constrained to rotate with the drive device (35) and a stator having three windings (53, 55, 57); and
- **in that** the angle-determining device (44) comprises an electronic assembly (49) for digitizing at least two voltages (S1S2, S2S3, S3S1) at the terminals of the windings of the transmitter synchro stator and for digitally processing these digitized voltages to produce at least one output signal (A, B, Z; P0-P15) representative of the angular position of the rotary drive device (35).

2. A system according to claim 1, **characterized in that** it includes a monitoring and control cabinet (39), which cabinet is designed to be located outside the nuclear reactor building and to contain the electronic assembly (49).

3. A system according to claim 1 or claim 2, **characterized in that** the electronic assembly (49) comprises:
a module (67) for determining the voltages (S1S2, S2S3, S3S1) at the terminals of the windings (53, 55, 57) of the transmitter synchro stator;
optionally a module (69) for adapting the determined voltages;
a module (71) for digitizing at least two of the determined and optionally adapted voltages (S1S2, S2S3); and
a module (61) for digitally processing the digitized voltages.

4. A system according to any preceding claim, **characterized in that** the electronic assembly (49) includes a module (63) for producing incremental coder type output signals (A, B, Z).

5. A system according to any one of claims 1 to 4, **characterized in that** the angle-determining device (44) is suitable for determining the position of the probe (7) by digitally processing the digitized voltages, and **in that** the electronic assembly (49) includes a module (63) for producing absolute coder type output signals (P0-P15).

6. A system according to any preceding claim, **characterized in that** the electronic assembly (49) is an assembly for digitizing only two voltages (S1S2, S2S3) of the determined and optionally adapted voltages.

7. A system according to any preceding claim, **characterized in that** the electronic assembly (49) includes a module (95) for detecting a drop in voltage and suitable for triggering backup of the determined position.

8. A system according to any preceding claim, **characterized in that** the electronic assembly (49) includes a module (93) for setting the determined position, which module (93) is designed to be connected to a microswitch of state that is modified by the probe (7) passing a determined position.

9. A system according to any preceding claim, **characterized in that** the electronic assembly (49) includes a generator (91) for powering a winding (51) of the rotor of the transmitter synchro (45) with modulation voltage.

10. A method of modifying an internal instrumentation system (3) of a nuclear reactor, the internal instrumentation system (3) comprising at least:
· a measurement probe (7) for measuring neutron flux in the core (5) of the nuclear reactor;
· a movement cable (9) for moving the probe inside the core (5);
· a rotary device (35) for driving the movement cable (9); and
· an angle-determining device (44) for determining the angular position of the rotary drive device (35), which angle-determining device comprises a transmitter synchro (45), a receiver synchro, and at least one position coder, the transmitter synchro itself comprising a rotor constrained to rotate with the rotary drive device (35) and a stator including three windings (53, 55, 57), the receiver synchro itself comprising a rotor constrained to rotate with the position coder and a stator having three windings connected to the windings of the transmitter synchro stator;
**characterized in that** it comprises a step of replacing the receiver synchro and the position coder by an electronic assembly (49) for digitizing at least two voltages (S1S2, S2S3, S3S1) at the terminals of the windings of the transmitter synchro stator, and for digitally processing the digitized voltages so as to produce at least one output signal (A, B, Z; P0-P15) representative of the angular position of the rotary drive device.
